# DEMANDE DE BREVET EUROPEEN

(11) **EP 1 170 535 A1**
(43) Date de publication de la demande: **09.01.2002**
(21) Numéro de dépôt: 01870113.6
(22) Date de dépôt: 30.05.2001
(51) Int. Cl.: F16K 41/10

(54) **Dispositif d'étanchéité pour vanne**

(30) Priorité: 31.05.2000 EP 00870120
(71) Demandeur: Techspace Aero S.A., 4041 Herstal (BE)
(72) Inventeur: Delobel, Pierre, 4031 Angleur (BE); Drapier, Jean-Marie, 1030 Bruxelles (BE); De Lamotte, Emmanuel, 4000 Liege (BE)
(74) Mandataire: Van Malderen, Joelle

(57) **Abrégé**

La présente invention se rapporte à un joint réalisé en une première matière (6) et revêtu d'une couche mince d'un revêtement. L'épaisseur du revêtement étant inférieure à 50µm, et de préférence inférieure à 30µm.
Un exemple préféré de revêtement est le sulfure de molybdène sous la forme MoSₓ où 1,5 ≤ x ≤ 2, et de préférence où x est proche de 1,6.

## Description

### Objet de l'invention

Le domaine considéré ici est celui des organes de régulation et des vannes présentant au moins une partie mobile et soumis à des conditions extrêmes d'utilisation. Parmi ces conditions figurent les pressions élevées, les températures très basses ou très hautes ainsi que l'utilisation de fluides agressifs.

La présente invention a plus particulièrement pour objet un dispositif d'étanchéité destiné à être utilisé dans un organe de régulation ou une vanne qui devrait pouvoir supporter des conditions extrêmes d'utilisation.

### Etat de la technique

Beaucoup d'équipements utilisés dans l'aéronautique et dans l'aérospatial sont des systèmes pneumatiques ou hydrauliques utilisant des vannes présentant un joint d'étanchéité disposé sur un support éventuellement mobile. Ces vannes doivent pouvoir résister à des conditions extrêmes d'utilisation.

Un exemple connu de telles vannes est la vanne à boisseau sphérique, qui comprend essentiellement un corps de vanne dans lequel un obturateur se présentant sous la forme d'une calotte sphérique munie d'un passage est actionné. Habituellement, un joint est fixé de manière rigide sur le support éventuellement mobile à l'arrière ou à l'avant du boisseau et permet d'assurer ainsi l'étanchéité de l'amont de la vanne vis-à-vis de l'aval de celle-ci lorsque la vanne est fermée. Lors de la fermeture de la vanne, le joint entre en contact avec ladite surface de contact sphérique du boisseau.

Il est également connu d'utiliser des vannes à obturateur mobile telles que des vannes à papillon, qui permettent d'obtenir une perte de charge au sein du conduit par le mouvement de l'obturateur. Cet obturateur est commandé par un arbre dont l'étanchéité par rapport à la vanne doit être assurée. Dans ce but, un dispositif d'étanchéité muni d'un joint d'étanchéité est prévu. Etant donné les conditions extrêmes dans lesquelles on veut travailler, le joint est habituellement un joint en carbone ou un joint métallique qui par une surface de contact entre l'arbre de la vanne et une bague, permet d'assurer l'étanchéité.

L'étanchéité doit être assurée de manière dynamique, vu le mouvement de rotation des pièces. La surface de contact doit être calculée et optimisée pour trouver un compromis entre une étanchéité importante et un faible frottement entre les pièces en mouvement.

Le document DE-2 239 971 décrit un matériau anti-friction constitué d'un mélange a priori homogène comprenant 20 à 65% en poids de carbure de silicium, 10 à 75% en poids de carbone et 5 à 25% en poids de silicium, qui peut être utilisé dans la fabrication de joints d'étanchéité, sans préciser comment. Ledit matériau peut également contenir des additifs tels que des métaux, comme par exemple le molybdène, ou des céramiques. Ce document décrit plus particulièrement un matériau comprenant 67% en poids de carbure de silicium, 25% en poids de graphite, 5% en poids de silicium libre et 3% en poids d'aluminium, ledit matériau présentant un coefficient de friction de 0,04.

le document US-4 1205 858 décrit un élément coulissant d'un dispositif destiné à assurer l'étanchéité de l'arbre du compresseur produisant l'air conditionné au sein d'un véhicule. Cet élément coulissant est formé par fusion sous compression thermique d'un mélange comprenant essentiellement 55 à 70% en poids d'une poudre à base de graphite contenant au moins 50% de graphite, environ 25 à 40% de résine synthétique comme liant, et 2 à 15% d'une charge basse-friction à base de nitrure de bore. A titre d'illustration, le document décrit notamment des tests de coulissement dans lesquels les coefficients de friction de mélanges selon l'invention sont comparés à ceux de mélanges de référence contenant des charges basse-friction connues telles que le disulfure de molybdène. En outre, le document montre, pour des mélanges selon l'invention, comment le coefficient de friction varie en fonction des proportions relatives de nitrure de bore et de poudre de quartz dans la charge basse-friction. On observe ainsi que pour certains rapports BN/SiO₂, le coefficient de friction du mélange est inférieur à 0,05. Etant donné qu'ils contiennent de la résine, ces mélanges ne conviennent pas à des utilisations dans des conditions extrêmes de température.

Le document Patent Abstracts of Japan No.07190244 décrit un dispositif permettant d'augmenter l'étanchéité d'une vanne, grâce à l'utilisation d'un soufflet par l'intermédiaire duquel la bague de la vanne peut être pressée. Aucune information n'est donnée dans ce document sur les caractéristiques du joint d'étanchéité utilisé.

### Buts de l'invention

L'invention a pour but de proposer un dispositif d'étanchéité, par exemple de l'arbre de vanne ou de l'organe de régulation, comprenant entre autres un joint d'étanchéité ayant un comportement tribologique adéquat, c'est-à-dire un comportement qui présente un bon compromis entre le caractère de lubrification élevé et le caractère de résistance à l'usure faible.

Plus précisément, l'invention a pour but de proposer un dispositif d'étanchéité permettant de résister à des conditions extrêmes de température et/ou de pression et/ou de nature du fluide.

### Principaux éléments caractéristiques de l'invention

La présente invention se rapporte à un joint réalisé en une première matière et revêtu d'une couche mince d'un revêtement en une seconde matière essentiellement constituée de sulfure de molybdène sous la forme MoSₓ où 1,5 ≤ x ≤ 2, et de préférence x est compris entre 1,5 et 1,7, l'épaisseur du revêtement étant inférieure à 50 µm, et de préférence inférieure à 30 µm.

Avantageusement, le revêtement dudit joint présente un coefficient de frottement inférieur à 0,05.

De préférence, la première matière du joint est telle qu'il présente des caractéristiques de haute ductilité, c'est-à-dire qu'il est facilement déformable sous contraintes.

Selon une première forme d'exécution, la première matière du joint est métallique, et de préférence choisie parmi le groupe constitué par l'acier, le titane, l'aluminium, le cuivre, le nickel et leurs alliages.

Selon une autre forme d'exécution, la première matière du joint est une céramique.

La présente invention se rapporte également à un organe de régulation comprenant un corps de vanne, un arbre de commande, un obturateur mobile, une bague solidaire d'un soufflet métallique et qui permet d'assurer la liaison avec ledit corps de vanne, ladite bague s'appuyant sur un joint métallique ou céramique pourvu d'un revêtement, caractérisé en ce que le revêtement est essentiellement constitué de sulfure de molybdène sous la forme MoSₓ où 1,5 ≤ x ≤ 2, et de préférence x est compris entre 1,5 et 1,7.

Avantageusement, ce revêtement présente un coefficient inférieur à 0,05.

Enfin, la présente invention se rapporte à l'utilisation d'un joint selon l'invention destiné à assurer l'étanchéité d'un organe de régulation aux températures cryogéniques ou aux températures comprises entre 200 et 800 °C, et à des pressions comprises entre 10 et 20 MPa.

### Brève description des dessins

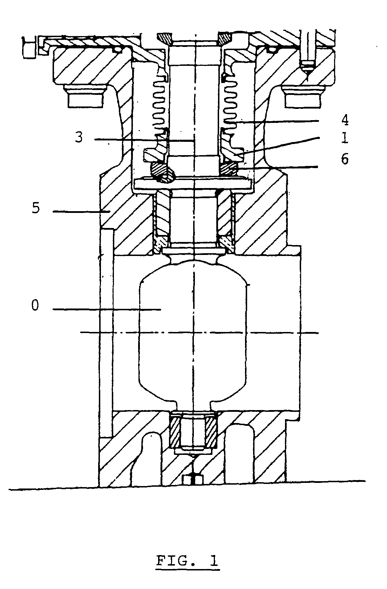

La figure 1 représente une vue en coupe d'une vanne à obturateur mobile présentant un dispositif d'étanchéité selon la présente invention.

### Description détaillée d'une forme préférée de l'invention

La figure 1 décrit un organe de régulation, et plus précisément une vanne à obturateur mobile correspondant à une vanne à papillon qui permet, par le mouvement de cet obturateur 0 d'augmenter la perte de charge au sein d'un conduit. Cet obturateur 0 est commandé par un arbre 3. Etant donné que les pièces sont en mouvement au sein même de la vanne, il est nécessaire de prévoir un dispositif d'étanchéité qui comprend en particulier une bague 1 en appui sur un joint d'étanchéité 6. La bague 1 est solidaire d'un soufflet métallique 4 qui assure la liaison avec le corps de vanne 5.

Etant donné que le type d'organe de régulation envisagé doit fonctionner dans des conditions extrêmes de température et/ou de pression, une solution est d'utiliser un joint métallique ou céramique. Le joint métallique peut être en acier, en aluminium, en titane, en cuivre, en nickel ou dans un de leurs alliages.

Un exemple de céramique pour cette application est le zircone (ZrO₂).

L'originalité du joint métallique ou céramique selon l'invention est qu'il est revêtu d'une fine couche d'un revêtement qui présente un faible coefficient de frottement, qui est de préférence inférieur à 0,05.

De préférence, l'épaisseur de ce revêtement est inférieure à 50 µm et encore de préférence, inférieure à 30 µm.

De manière particulièrement avantageuse, on observe que le fait de prévoir un revêtement mince sur le joint permet de concilier de bonnes caractéristiques d'étanchéité avec des caractéristiques de faible résistance au frottement.

Un premier exemple d'un tel revêtement est le MoSₓ où x est compris entre 1,5 et 2 inclus.

De manière particulièrement avantageuse, x est supérieur à 1,5 et strictement inférieur à 2.

De préférence, x est compris entre 1,5 et 1,7, et plus particulièrement est proche de 1,6.

De manière avantageuse, on observe qu'en diminuant le facteur x, les propriétés d'autolubrification sont renforcées.

Le disulfure de molybdène (MoS₂) est connu pour ses bonnes propriétés autolubrifiantes. En effet, sa structure, plan-hexagonal (en C7) avec des liaisons covalentes Mo-S et des liaisons faibles par ponts disulfures S-S, comporte de nombreuses surfaces de glissement.

De manière avantageuse, de tels joints pourront être utilisés à des températures particulièrement basses et même cryogéniques, c'est-à-dire inférieures à -80 °C, et pourront également être utilisés pour des températures qui peuvent atteindre 600 et même 800 °C. Même dans ces cas de figure, un bon fonctionnement de l'organe de régulation reste assuré.

De tels joints peuvent également être utilisés pour des organes de régulation tels que des vannes à boisseau ou à papillon, résistant à des pressions comprises entre 100 et 200 bars, c'est-à-dire entre 1.10⁷ et 2.10⁷ Pa.

### Exemple de réalisation d'un revêtement sur un joint selon la présente invention

Un dépôt de sulfure de molybdène sur le joint métallique ou céramique est effectué comme suit. Le dépôt s'effectue sous la forme d'un film mince qui est obtenu par sputtering magnétron cathodique d'une cible de molybdène métallique dans une atmosphère de disulfure d'hydrogène et d'argon (0,3 à 0,5 Pa).

La nature du substrat du joint peut être du métal comme l'acier, l'aluminium, le titane, le cuivre, le nickel ou l'un de leurs alliages, ou encore de la céramique. De préférence, la rugosité reste faible, de l'ordre de 0.2µ par exemple, de manière à maintenir un très bon fini de la pièce. La température du substrat est comprise entre 100 et 300 °C. Le substrat est polarisé à une valeur moyenne de -100 V. La vitesse de dépôt est comprise entre 0,2 et 0,5 µm.min⁻¹. L'épaisseur du dépôt obtenu peut être de manière particulièrement avantageuse comprise entre 0,7 et 28 µm.

D'autres techniques de dépôt peuvent être envisagées, comme la technique PVD ou la technique plasma.

La dureté du dépôt obtenu est comprise entre 2000 et 6000 MPa ; le dépôt présente une bonne adhésion sur le substrat ainsi qu'une bonne stabilité thermique.

Le coefficient de frottement, mesuré dans des conditions standard, est compris entre 0,02 et 0,04. Ces conditions standard consistent à effectuer le test pion/disque, qui peut être réalisé sous atmosphère sèche d'azote contrôlée pour une charge de 5 N et une vitesse de 10⁻² m/s. Le coefficient de friction après 10000 tours est alors mesuré.

En particulier, par rapport aux joints utilisés précédemment, le joint métallique ou céramique revêtu de MoSₓ où X = 1,6 permet une utilisation à des températures pouvant atteindre 1100 °C sous vide et 700 °C en atmosphère gaz chaud. Une lubrification correcte est encore assurée, tant dans le vide qu'en atmosphère sèche, tant aux températures cryogéniques qu'aux hautes températures. Dans certaines conditions extrêmes, l'usure du joint est beaucoup plus limitée qu'avec les autres matériaux connus utilisés pour des joints classiques tels que des joints en polymère, des joints métalliques non revêtus ou des joints en carbone pour ces diverses applications.

Un autre exemple de conditions extrêmes pour des vannes à papillon selon la présente invention est leur utilisation dans le cas où des fluides particulièrement agressifs tels que l'oxygène et l'acide sont en contact avec les joints d'étanchéité.

Pour optimiser l'étanchéité, la géométrie du joint métallique est choisie de manière telle que le contact du joint sur les faces en vis-à-vis est limité à une zone annulaire (appelée zone de contact). Ceci signifie que la pression locale de contact reste particulièrement élevée sur la zone de contact, c'est-à-dire comprise entre 5 et 50 MPa. Les dimensions de cette zone sont choisies pour obtenir une pression de contact adéquate, qui est un compromis entre les limites des matériaux vis-à-vis du frottement et des caractéristiques d'étanchéité.

Un joint métallique revêtu d'un dépôt de sulfure de molybdène tel que décrit dans l'exemple d'exécution présentera des caractéristiques de tenue mécanique améliorées et moins dispersées (caractéristiques mécaniques du joint plus régulières) par rapport aux joints de l'état de la technique. En particulier, le joint est peu fragile et présente une pression locale de contact relativement élevée.

Par rapport aux joints classiques, c'est-à-dire des joints métalliques ou céramiques sans revêtement tels qu'ils sont connus dans l'état de la technique, les joints métalliques ou céramiques avec revêtement selon l'invention présentent l'avantage de conserver leur capacité de résistance à l'usure dans des conditions extrêmes tout en présentant un pouvoir de lubrification plus élevé.

En outre, dans le cas particulier où le joint est métallique, on tire avantage de la haute ductilité du métal. Cette structure de joint en bicouche se révèle donc d'un très grand intérêt.

## Revendications

1. Joint réalisé en une première matière et revêtu d'une couche mince d'un revêtement en une seconde matière qui est essentiellement constituée de sulfure de molybdène sous la forme MoSₓ où X est compris entre 1,5 et 2, et de préférence entre 1,5 et 1,7, l'épaisseur du revêtement étant inférieure à 50 µm, et de préférence inférieure à 30 µm.

2. Joint selon la revendication 1, **caractérisé en ce que** la première matière du joint est métallique, et de préférence choisie parmi le groupe constitué par l'acier, le titane, l'aluminium, le cuivre, le nickel et leurs alliages.

3. Joint selon la revendication 1, **caractérisé en ce que** la première matière du joint est une céramique.

4. Organe de régulation comprenant un corps de vanne (5), un arbre de commande (3), un obturateur mobile (0), une bague (1) solidaire d'un soufflet métallique (4) et qui permet d'assurer la liaison avec ledit corps de vanne (5), ladite bague (1) s'appuyant sur un joint métallique ou céramique (6) pourvu d'un revêtement, **caractérisé en ce que** le revêtement est essentiellement constitué de sulfure de molybdène sous la forme MoSₓ où X est compris entre 1,5 et 2, et de préférence entre 1,5 et 1,7, l'épaisseur du revêtement étant inférieure à 50 µm, et de préférence inférieure à 30 µm.

5. Utilisation d'un joint selon l'une quelconque des revendications 1 à 3, pour assurer l'étanchéité d'un organe de régulation aux températures cryogéniques ou aux températures comprises entre 200 et 800 °C.

6. Utilisation d'un joint selon l'une quelconque des revendications 1 à 3, pour assurer l'étanchéité d'un organe de régulation à des pressions comprises entre 10 et 20 MPa.
